# EUROPÄISCHE PATENTSCHRIFT

(11) **EP 2 205 485 B1**
(45) Veröffentlichungstag und Bekanntmachung des Hinweises auf die Patenterteilung: **23.10.2013**
(21) Anmeldenummer: 08847727.8
(22) Anmeldetag: 31.10.2008
(51) Int. Cl.: B64D 11/00, H04N 7/18, G01C 23/00

(54) **ANZEIGEMODUL ZUM ANZEIGEN VON PASSAGIERSPEZIFISCHEN ANZEIGEINFORMATIONEN**
DISPLAY MODULE FOR DISPLAYING PASSENGER-SPECIFIC DISPLAY INFORMATION
MODULE D'AFFICHAGE POUR L'AFFICHAGE D'INFORMATIONS D'AFFICHAGE SPÉCIFIQUES AUX PASSAGERS

(30) Priorität: 05.11.2007 DE 102007052671; 05.11.2007 US 1821
(43) Veröffentlichungstag der Anmeldung: 14.07.2010
(73) Patentinhaber: Airbus Operations GmbH, 21129 Hamburg (DE)
(72) Erfinder: STOLL, René, 22119 Hamburg (DE); FREY, Martin, 22147 Hamburg (DE); HAUSCHILDT, Reimer, 25582 Hohenaspe (DE)
(74) Vertreter: Maiwald Patentanwalts GmbH
(86) Internationale Anmeldenummer: PCT/EP2008/064786
(87) Internationale Veröffentlichungsnummer: WO 2009/059932

(56) Entgegenhaltungen:
- EP-A- 1 338 507
- WO-A-02/18207
- WO-A-99/04381
- DE-A1- 19 705 643
- DE-A1-102005 002 790
- US-A1- 2005 162 396
- US-A1- 2007 061 847
- US-B1- 6 393 343

## Beschreibung

### Gebiet der Erfindung

Die Erfindung betrifft ein intelligentes und flexibles Anzeigemodul zum Anzeigen von Anzeigeinformationen (display based sign) und ein Verfahren zum Betreiben eines derartigen Anzeigemoduls, insbesondere ein Anzeigemodul zum Anzeigen von passagierspezifischen Anzeigeinformationen in einem Luftfahrzeug. Ferner betrifft die Erfindung ein Luftfahrzeug mit einem derartigen Anzeigemodul.

### Hintergrund der Erfindung

Bekannte Anzeigemodule zum Anzeigen von Anzeigeinformationen (Info-Signs) bestehen aus einer hinterleuchteten Lichtscheibe, in welche feste Piktogramme integriert sind. Der Bereich der Lichtscheibe in dem sich ein Piktogramm befindet ist durchleuchtbar. Auf einer hinter der Lichtscheibe befindlichen Leiterplatte befinden sich Leuchtdioden (früher Bi-Pin Lämpchen). Ein Piktogramm wird angezeigt, indem eine Aktivierung durch Anlegen einer Versorgungsspannung erfolgt, was die Hinterleuchtung einschaltet und das Piktogramm durch Durchleuchtung sichtbar macht.

Ein Nachteil der bekannten Anzeigemodule ist, dass diese nicht flexibel sind, da die Piktogramme fest in die Lichtscheibe integriert sind. Wird zum Beispiel ein anderes Piktogramm, eine andere Kombination von Piktogrammen oder eine andere Deckfarbe benötigt, so muss eine neue Lichtscheibe spezifiziert und qualifiziert werden, wodurch hohe Entwicklungskosten und lange Lieferzeiten entstehen. Da zum Beispiel bei einigen Anzeigemodulen die Positionen der Leuchtdioden auf der Leiterplatte an das jeweilige Piktogramm angepasst sind, um eine optimale Durchleuchtung zu erhalten, müssen für diese Anzeigemodule im Falle neuer Piktogramme auch die Leiterplatten neu entwickelt werden. Ist ein Piktogramm zum Beispiel nicht eindeutig verständlich, so wird außerdem eine Erläuterung durch einen kurzen Text notwendig. Da ein solcher Text - genau wie die Piktogramme - fest in die Lichtscheibe eingebracht werden muss, ist eine mehrsprachige Erläuterung nur eingeschränkt möglich. Da die Texte aus Platzgründen sehr kurz sein müssen, sind bei bekannten Anzeigemodulen maximal zweisprachige Texte möglich. Auch kann, wenn das Anzeigemodul nicht aktiv ist, der vorhandene freie Platz nicht für andere Zwecke verwendet werden.

Es kann auch ein Nachteil der bekannten Anzeigemodule angesehen werden, dass diese maximal zwei unabhängige Kammern umfassen, die auf die oben beschriebene Weise funktionieren.

Ferner können aus Platzgründen lediglich zwei Piktogramme in eine Lichtscheibe eingebracht werden. Das wird zu einem Nachteil, wenn beispielsweise neue Kommunikationssysteme wie zum Beispiel das "GSM on Board" System (Global System for Mobile Communications on Board) in Luftfahrzeugen benutzt werden. Derartige Kommunikationssysteme erfordern weitere Piktogramme, die zum Beispiel nicht durch ein einfaches Bildzeichen realisiert werden können. So wird es in Zukunft notwendig sein mehr als zwei Piktogramme darstellen zu können, wobei einige der Piktogramme komplexer werden können.

Bedingt durch die fehlende Flexibilität und die Reduzierung auf zwei einfache Piktogramme und auf zweisprachige Texte ist der mögliche Informationsgehalt der bekannten Anzeigemodule sehr gering.

Die EP 1 338 507 A zeigt eine Informations- und Anzeigeeinrichtung für eine Versorgungseinheit eines Passagierflugzeugs.

Die DE 10 2005 002790 A1 beschreibt ein Anzeigeelement zur Verwendung für einen Passagiersitz in einer Rückenlehne des Passagiersitzes.

Aus der WO 99/04381 A ist eine Anzeigeeinheit für Passagiere bekannt, die im Rückenlehnenbereich eines Passagiersitzes angebracht werden kann.

Die WO 02/18207 A1 betrifft einen Fluggastsitz mit einer kombinierten Anzeige- und Steuereinrichtung.

Die DE 197 05 643 A1 zeigt ein leitungsgebundenes Übertragungssystem für Luftfahrzeugkabinen.

Aus der US 2007/061847 A1 ist ein Kabinen-Service-System für ein Luftfahrzeug bekannt.

Die US 6,393,343 B1 zeigt Passagiereinheiten für ein Luftfahrzeug mit einem Passagier-Interface.

Die US 2005/0162396 A1 betrifft eine Anzeigeeinheit zum Anzeigen von kundenspezifischen Nachrichten mit einem statischen Display.

### Zusammenfassung der Erfindung

Es kann als eine Aufgabe der Erfindung angesehen werden ein Anzeigemodul zum Anzeigen von Anzeigeinformationen mit einer erheblich verbesserten Flexibilität und mit einem erheblich vergrößerten Informationsgehalt bereitzustellen.

Die Aufgabe der Erfindung wird gelöst durch den Gegenstand der unabhängigen Ansprüche, während vorteilhafte Weiterentwicklungen der Erfindung durch die abhängigen Ansprüchen verkörpert werden.

Es sollte bemerkt werden, dass sich die im Folgenden beschriebenen Ausführungsformen der Erfindung gleichermaßen auf das Anzeigemodul, das Verfahren zum Betreiben des Anzeigemoduls und das Luftfahrzeug beziehen.

Gemäß der Erfindung wird ein Anzeigemodul zum Anzeigen von passagierspezifischen Anzeigeinformationen in einem Luftfahrzeug bereitgestellt, wobei das Anzeigemodul eine Anzeigeeinheit (ein Display), eine Steuerung, einen Speicher und eine erste Schnittstelle umfasst, wobei die erste Schnittstelle mit der Steuerung verbunden ist, und wobei die Steuerung ausgelegt ist, um auf der Grundlage eines an der ersten Schnittstelle anliegenden Signals einen in dem Speicher abgelegten und dem Signal zugeordneten Speicherinhalt bezüglich Anzeigeinformation auszulesen und auf der Grundlage des ausgelesenen Speicherinhalts und des an der Schnittstelle anliegenden Signals die Anzeigeeinheit anzusteuern.

Ein derartiges Anzeigemodul ermöglicht es, dass die passagierspezifischen Anzeigeinformationen wie zum Beispiel Bildelemente und/oder Symbole und/oder Videosequenzen und/oder Texte in einem internen Speicher des Anzeigemoduls gespeichert werden können. Auch können verschiedene Einteilungen der Anzeigeeinheit (Displaylayouts) in Layoutbereiche und Formatierungen im Speicher des Anzeigemoduls abgelegt werden. Dem Anzeigemodul kann über die jeweilige Ansteuerung mitgeteilt werden, welches Bildelement und/oder welches Symbol und/oder welche Videosequenz und/oder welcher Text mit welchem Displaylayout angezeigt werden soll. Der Inhalt der einzelnen im Displaylayout definierten Bereiche kann bedarfsgemäß geändert werden, so dass eine bedarfsgerechte Nutzung des zur Verfügung stehenden Anzeigeeinheitsplatzes gewährleistet werden kann.

Ein derartiges Anzeigemodul kann in einem Datenbusbetrieb (Databus Mode) verwendet werden, wobei die Ansteuerung über die Schnittstelle, die eine Datenbusschnittstelle ist, erfolgt, und wobei das Anzeigemodul über den Datenbus sowohl Daten empfangen als auch senden kann. Auch wird es mit einem derartigen Anzeigemodul möglich, einen vorher definierten Inhalt anzuzeigen, wenn das Datenbussignal gestört wird.

Ein derartiges Anzeigemodul kann im Innenraum eines Luftfahrzeugs zum Beispiel an einer Wand und/oder einer Decke und/oder in einem Sitz und/oder in einer PSU (Passenger Service Unit) eingebaut werden. Ein derartiges Anzeigemodul kann auch zum Beispiel in einem Raucherbereich eines Luftfahrzeugs eingesetzt werden, wenn der Raucherbereich beispielsweise mit einer automatischen zeitbegrenzten Aussetzung des Feueralarms beim Betreten ausgestattet ist. Das Anzeigemodul kann den Aus-Zustand des Feueralarms und die verbleibende Zeit dieses Zustands anzeigen. Die verbleibende Zeit kann von dem rauchenden Passagier durch eine Betätigung eines Knopfs oder eines Sensors, der entweder in dem Anzeigemodul integriert ist oder mit dem Anzeigemodul verbunden ist, verlängert werden. Unabhängig davon kann, bei einer beliebigen Einsetzung des Anzeigemoduls, das Anzeigemodul einen ähnlichen Auslöseknopf umfassen, um zum Beispiel dem Passagier zu ermöglichen durch ein Signal mit dem Begleitungspersonal Kontakt aufzunehmen.

Ein derartiges Anzeigemodul ermöglicht eine flexible Nutzung des zur Verfügung stehenden Platzes. Das Anzeigemodul ermöglicht die Darstellung von mehr als zwei Piktogrammen. Der Aufwand für die Einführung neuer Piktogramme, Piktogrammkombinationen, Videosequenzen, Texte, Formatierungen und Farbvarianten kann mit einem derartigen Anzeigemodul vereinfacht und verkürzt werden. Damit können Kosten und Zeit gespart werden. Mehrsprachige Texterläuterungen von Piktogrammen können angezeigt werden. Weitere Informationen verschiedenster Art können, über die Funktion der bekannten Anzeigemodule hinaus, dargestellt werden.

Diese Ausführungsform ermöglicht auch einen Gleichstrombetrieb (DC data mode), wobei die Ansteuerung über die Schnittstelle, die zur Übertragung eines Bitmustersignals ausgelegt ist, erfolgt. Dabei werden Datensignalen vom Luftfahrzeugsystem in Form eines Bitmutmusters über die Schnittstelle an das Anzeigemodul übertragen. Damit kann eine einseitige Kommunikation vom Flugzeugsystem zu dem Anzeigemodul erfolgen. Auch wird es mit einem derartigen Anzeigemodul möglich, einen vorher definierten Inhalt anzuzeigen, wenn das Bitmustersignal gestört wird.

Ferner ermöglicht diese Ausführungsform auch einen Stand-Alone Modus, wenn es keine Datenanbindung gibt (z. B. in älteren Flugzeugmodellen). Da sowohl ein angelegter Spannungspegel als auch ein Signal aufzunehmen ist, wird der Stand-Alone Modus ermöglicht, wobei die Ansteuerung über die Schnittstelle, die zur Übertragung eines Spannungspegelsignals ausgelegt ist, erfolgt. Aufgrund des der Spannung entsprechenden Signals kann ein vorher Festgelegter Inhalt angezeigt werden.

Die Steuerung kann weiter aufgeteilt werden, wobei zum Beispiel eine Unterteilung in eine Anwendungssteuerung und eine Anzeigeeinheitsteuerung möglich ist.

Um die darzustellenden Inhalte und die notwendigen Konfigurationsdaten in den Speicher des Anzeigemoduls zu bekommen, kann zum Bespiel einen drahtgebundener und/oder ein drahtloser Hochlademodus (wired upload mode und/oder wireless upload mode) vorgesehen werden.

Gemäß einer beispielhaften Ausführungsform umfasst das Anzeigemodul eine zweite Schnittstelle, die zur Ankopplung einer Spannungsversorgung an das Anzeigemodul ausgelegt ist.

Ein derartiges Anzeigemodul kann zum Beispiel für eine kostengünstige Umrüstung älterer Luftfahrzeuge benutzt werden, in welchen die für die herkömmlichen Anzeigemodule vorhandene Verkabelung genutzt werden kann. Die vorhandene Verkabelung kann zum Beispiel aus zwei Gleichstromleitungen (DC Leitungen) bestehen. Mit Hilfe dieser diskreten DC Leitungen, die zum Beispiel ein gemeinsames Bezugspotenzial haben, werden die beiden Kammern der herkömmlichen Anzeigemodule ein- bzw. ausgeschaltet. Für einen Betrieb eines Anzeigemoduls gemäß der vorliegenden Erfindung kann ein Gleichstromdatenbetrieb (DC Data Mode) genutzt werden, wobei eine der DC Leitungen dauerhaft eingeschaltet werden und als Spannungsversorgung dienen kann. Diese DC Leitung kann mit der zweiten Schnittstelle gekoppelt werden und das Anzeigemodul mit Spannung versorgen. Die andere Leitung kann an die erste Schnittstelle gekoppelt werden und getaktet (ein- und ausgeschaltet) werden, damit ein Bitmuster über die erste Schnittstelle an das Anzeigemodul übertragen werden kann. Somit kann eine einseitige Kommunikation vom Luftfahrzeugsystem zu dem Anzeigemodul erfolgen. Auch wird es mit einem derartigen Anzeigemodul möglich einen vorher definierten Inhalt anzuzeigen, wenn das getaktete Signal gestört wird.

Gemäß einer beispielhaften Ausführungsform ist ferner die erste Schnittstelle zur Ankopplung einer Spannungsversorgung an das Anzeigemodul ausgelegt. Dabei wird eine zweite Schnittstelle nicht zwingend benötigt.

Diese Ausführungsform ermöglicht einen Gleichstrombetrieb, wobei die Schnittstelle gleichzeitig benutzt wird, um das Anzeigemodul mit Spannung zu versorgen und ein Bitmuster an das Anzeigemodul zu übertragen. Die Spannungsversorgung und die Taktung kann mit einer Leitung, die mit der Schnittstelle gekoppelt wird, erfolgen, wobei die Energie des Signals auch zur Spannungsversorgung ausgenutzt wird. Alternativ kann für die Spannungsversorgung und die Taktung jeweils eine eigene - an die Schnittstelle gekoppelte - Leitung vorgesehen werden.

Diese Ausführungsform ermöglicht auch einen Betrieb des Anzeigemoduls in einem Stand-Alone Modus, wobei die Schnittstelle gleichzeitig zur Spannungsversorgung und zu Signalübertragung vorgesehen ist. Dabei ist sowohl ein - z. B. von der Versorgungsspannung unterschiedlicher - angelegter Spannungspegel als auch ein Signal aufzunehmen. Der Stand-Alone Modus kann z. B. mit einer an die Schnittstelle gekoppelt Leitung erfolgen. Diese Leitung wird sowohl zur Spannungsversorgung als auch zur Übertragung eines Spannungspegelsignals benutzt. Der Stand-Alone Mode kann erfolgen, indem an die Leitung eine entsprechende Spannung angelegt wird. Aufgrund des der Spannung entsprechenden Signals kann dabei ein vorher festgelegter Inhalt angezeigt werden. Alternativ kann für die Spannungsversorgung und die Übertragung des Spannungspegelsignals jeweils eine eigene Leitung vorgesehen werden.

Gemäß einer beispielhaften Ausführungsform ist ferner die erste Schnittstelle auch zur Ankopplung einer Spannungsversorgung an das Anzeigemodul ausgelegt, wobei die zweite Schnittstelle auch mit der Steuerung verbunden ist, wobei die Steuerung ausgelegt ist, um auf der Grundlage eines an der zweiten Schnittestelle anliegenden Signals einen zweiten Speicherinhalt bezüglich Anzeigeinformation auszulesen und auf der Grundlage des ausgelesenen zweiten Speicherinhalts und des an der zweiten Schnittstelle anliegenden Signals die Anzeigeeinheit anzusteuern.

Diese Ausführungsform ermöglicht beispielsweise einen Stand-Alone Modus, wobei z. B. die für die herkömmlichen Anzeigemodule vorhandene Verkabelung genutzt werden kann. Die vorhandene Verkabelung kann zum Beispiel aus zwei Gleichstromleitungen (DC Leitungen) bestehen. Wird an einer der beiden Leitungen, die an die jeweiligen Schnittstellen gekoppelt werden, eine entsprechende Spannung angelegt, so wird ein vorher festgelegter Inhalt angezeigt. Zum Beispiel: Wird an einer Leitung z. B. 5V angelegt, so wird ein erster Inhalt angezeigt; wird an der anderen Leitung z. B. 5V angelegt, so wird ein zweiter Inhalt angezeigt; wird an beiden Leitungen z. B. 5V angelegt, so wird ein dritter Inhalt angezeigt.

Gemäß der Erfindung ist die Steuerung ausgelegt, um die Anzeigeeinheit hinsichtlich der Darstellungsposition und/oder Darstellungsgröße der Anzeigeinformation anzusteuern.

Dies ermöglicht es eine optimale Skalierung und Platzierung der Anzeigeinformation in der Anzeigeeinheit zu erreichen. Wird zum Beispiel eine Unterteilung der Steuerung in eine Anwendungssteuerung und eine Anzeigeeinheitsteuerung vorgesehen, so sorgt die Anwendungssteuerung für die optimale Skalierung und Platzierung von Anzeigeinformationen.

Gemäß einer beispielhaften Ausführungsform umfasst das Anzeigemodul ferner ein Abdeckelement, das als mechanischer Schutz der Anzeigeeinheit, mechanische Anpassung an die Umgebung, und/oder als Blendschutz gegen Streulicht ausgelegt ist.

Mit einem derartigen Abdeckelement, das zum Beispiel eine Adapterlinse sein kann, wird für eine optimale Sichtbarkeit der Anzeigeinformationen gesorgt. Das Abdeckelement kann ein transparentes (klarsichtiges) Material wie z. B. Kunststoff oder Glas beinhalten und kann folgende Aufgaben haben: ein Optisches Einpassen der zum Beispiel rechteckigen Anzeigeeinheit in das Design der Umgebung, eine Abdeckung des Randes um die nutzbare Anzeigefläche herum und eine mechanische Befestigung des Anzeigemoduls. Das Abdeckelement kann zum Beispiel oval oder rechteckig geformt sein.

Gemäß einer beispielhaften Ausführungsform sind die Steuerung, der Speicher und die Schnittstellen in einer Steuerungsplatine integriert.

Eine Steuerungsplatine kann für einen effizienten und kompakten Aufbau des Anzeigemoduls genutzt werden. Ferner kann die Steuerungsplatine in das Anzeigemodul mittels des Abdeckelements aufgenommen werden. In der Steuerplatine können auch weitere optionale Komponenten integriert werden (z. B. eine drahtlose Schnittstelle und/oder Anzeigeeinheit-Schnittstelle).

Gemäß einer beispielhaften Ausführungsform ist wenigstens eine der Schnittstellen eine drahtlose Schnittstelle.

Diese Ausführungsform ermöglicht es eine Gerätevariante des Anzeigemoduls mit einer kabellosen Schnittstelle (zum Beispiel einer kabellosen Datenbusschnittstelle) bereitzustellen, wobei das Anzeigemodul in einem drahtlosen Datenbusbetrieb (wireless databus mode) erfolgt und die Funktionalität und der Funktionsumfang identisch mit dem des Datenbusbetriebs ist.

Gemäß einer beispielhaften Ausführungsform ist die Anzeigeinformation eine Information aus wenigsten einem Element einer Gruppe die aus Bildelementen, Videosequenzen, Text und Formatierung besteht.

Diese Ausführungsform ermöglicht es die passagierspezifischen Anzeigeinformationen optimal nach dem jeweiligen Zweck zu gestalten. Einige Informationen, wie zum Beispiel "Nichtrauchen" oder "Anschnallen" können mit einfachen Piktogrammen angezeigt werden. Andere Informationen, wie zum Beispiel "das Mobiltelefon ausschalten" könnten besser mit einer Bild/Text-Kombination oder mit einer Videosequenz angezeigt werden. Weitere spezifische Informationen können durch statische oder laufende Texte (z. B. Flughöhe, verbliebene Flugzeit, Anschlussflüge, Börsenkurse, Wetterbericht und wichtige Nachrichten) mehrsprachig angezeigt werden. Ferner können gleichzeitig mehrere Bildelemente und/oder Videosequenzen und/oder Textinhalte flexibel in verschiedenen Bereichen der Anzeigeeinheit angezeigt werden.

Gemäß einer beispielhaften Ausführungsform ist die Steuerung ausgelegt, um die Anzeige auf der Grundlage einer Anzeigeinformation aus einem Text und einer entsprechenden Textformatierung anzusteuern.

Somit können die Textinhalte und/oder Textobjekte, die zur Laufzeit veränderbar sind, effizient dargestellt werden, wobei die Formatierungen (configuration data) vorher festgelegt und im Speicher des Anzeigemoduls gespeichert sein können. Lediglich der Textinhalt kann über der Zeit über den Datenbus geändert werden. Damit können auf eine einfache und effiziente Weise Daten (z. B. Flughöhe, verbliebene Flugzeit, Anschlussflüge, Börsenkurse, Wetterbericht und wichtige Nachrichten) während des Flugs aktualisiert und dargestellt werden. Ferner können somit die Textinhalte und/oder Textobjekte ähnlich wie Piktogramme und Videosequenzen in Layoutbereiche eingebunden werden.

Gemäß einer beispielhaften Ausführungsform ist die Steuerung ausgelegt, um den Speicherinhalt über eine der Schnittstellen ein- bzw. auszulesen.

Durch diese Maßnahme können flexibel neue Piktogramme und/oder Videosequenzen und/oder Textinhalte und/oder Formatierungen in dem Anzeigemodul flexibel gespeichert werden. Auch können die gespeicherten Daten auf diese Weise nach bedarf einfach und effizient modifiziert und/oder geändert werden.

Gemäß einer beispielhaften Ausführungsform umfasst das Anzeigemodul einen Uhrbaustein, wobei die Steuerung ausgelegt ist, um auf der Grundlage eines an einer der Schnittstellen anliegenden Signals den Uhrbaustein auszulesen und auf der Grundlage des ausgelesenen Uhrbausteins und des an der Schnittstelle anliegenden Signals die Anzeigeeinheit anzusteuern.

Mit einem Uhrbaustein kann die aktuelle Ortszeit auf dem Anzeigemodul angezeigt werden. Dabei wird die Anfangsuhrzeit (initiale Uhrzeit) vom Luftfahrzeugsystem übermittelt und kann in entsprechenden Intervallen erneut abgeglichen werden. Somit kann beispielsweise bei Erreichen einer anderen Zeitzone die Urzeit aktualisiert werden. Der Uhrbaustein kann ebenso in Layoutbereiche eingebunden werden wie Piktogramme, Videosequenzen und Textobjekte, und kann zum Beispiel im Datenbusbetrieb benutzt werden.

Gemäß einer beispielhaften Ausführungsform umfasst das Anzeigemodul eine Anzeigemodultestvorrichtung, wobei die Anzeigemodultestvorrichtung ausgebildet ist, um einen Datenaustausch zu Testzwecken zu veranlassen.

Somit kann eine zweiseitige Kommunikation zwischen dem Luftfahrzeugsystem und dem Anzeigemodul erfolgen, indem ein Testsystem wie zum Beispiel ein BITE (Built-In Test Equipment) zum Testen des Anzeigemoduls benutzt wird. Dabei könnten zum Beispiel die BITE-Daten von dem Anzeigemodul an das Flugzeugsystem gesendet werden. Dies kann zum Beispiel im Datenbusbetrieb erfolgen.

Gemäß einer beispielhaften Ausführungsform wird ein Luftfahrzeuginformationssystem mit einem erfindungsgemäßen Anzeigemodul bereitgestellt, wobei das Luftfahrzeuginformationssystem ferner ein Leitsystem für den Passagierraum (Cabin Management System) und ein Flugbegleitersteuerpult (Flight Attendant Panel) umfasst, wobei das Flugbegleitersteuerpult zum Ansteuern des Anzeigemoduls über das Leitsystem ausgestaltet ist.

Damit können die Flugbegleiter über zum Beispiel ein FAP (Flight Attendant Panel) durch unterschiedliche Bedienelemente gewünschte Einstellungen des Anzeigemoduls manuell vornehmen oder Bedingungen während des Flugs anpassen. Mit dem CMS (Cabin Management System) wird für eine reibungslose technische Umsetzung der entsprechenden Steuerungsbefehle gesorgt.

Gemäß einer beispielhaften Ausführungsform wird ein Luftfahrzeug mit einem erfindungsgemäßen Anzeigemodul bereitgestellt.

Durch diese Maßnahme wird ein effektives Kommunikationssystem in einem Luftfahrzeug bereitgestellt, das eine zweiseitige Kommunikation zwischen dem Luftfahrzeugsystem und dem Anzeigmodul ermöglicht. Daten wie zum Beispiel Nummer der Anzeigeeinheitseinteilung (des Displaylayouts), Identifikationsnummern der Piktogramme, Videosequenzen, Textinhalte und/oder die Uhrzeit für jeden im Layout definierten Bereich können vom Luftfahrzeugsystem an das Anzeigemodul gesendet werden. Testdaten wie zum Beispiel BITE-Daten können beispielsweise im Datenbusbetrieb von dem Anzeigemodul an das Luftfahrzeugsystem übermittelt werden.

Gemäß einer beispielhaften Ausführungsform wird ein Verfahren zum Anzeigen von passagierspezifischen Anzeigeinformationen in einem Luftfahrzeug bereitgestellt, wobei das Verfahren umfasst: Anlegen eines Signals an einer Schnittstelle eines Anzeigemoduls, Auslesen eines Speicherinhaltes bezüglich Anzeigeinformation des Anzeigemoduls auf der Grundlage des an der Schnittestelle angelegten Signals, und Ansteuern einer Anzeigeeinheit auf der Grundlage des ausgelesenen Speicherinhalts und des an der Schnittstelle angelegten Signals.

Es sollte bemerkt werden, dass sich die im Folgenden beschriebenen Ausführungsformen der Erfindung gleichermaßen auf die Vorrichtung, das Verfahren und das Luftfahrzeug beziehen.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Fig. 1 zeigt eine beispielhafte schematische Darstellung eines mechanischen Aufbaus des Anzeigemoduls.
Fig. 2 zeigt eine schematische Darstellung des Aufbaus und der Funktionalität des Anzeigemoduls gemäß einer beispielhaften Ausführungsform.
Fig. 3 zeigt eine schematische Darstellung des Aufbaus und der Funktionalität des Anzeigemoduls gemäß einer weiteren beispielhaften Ausführungsform.
Fig. 4 zeigt eine beispielhafte Einteilung der Anzeigeeinheit mit einem Layoutbereich.
Fig. 5a und Fig. 5b zeigen beispielhafte Einteilungen der Anzeigeeinheit mit zwei Layoutbereichen.
Fig. 6 zeigt eine beispielhafte Einteilung der Anzeigeeinheit mit vier Layoutbereichen.
Fig. 7a bis 7e zeigen einige Beispiele der Verarbeitung bzw. Veränderung von Bildelementen innerhalb der Layoutbereiche der Anzeigeeinheit.
Fig. 8a bis 8d zeigen eine beispielhafte Veränderung der Einteilung der Anzeigeeinheit und der Bildanzeige.
Fig. 9a bis 9d zeigen eine beispielhafte Veränderung der Einteilung der Anzeigeeinheit und der Bildanzeige mit einem Bereichssprung.
Fig. 10 zeigt einige Beispiele des Verhaltens des Anzeigemoduls in dem Datenbusbetrieb.
Fig. 11 zeigt einige weiteren Beispiele des Verhaltens des Anzeigemoduls in dem Datenbusbetrieb.
Fig. 12 zeigt ein Luftfahrzeuginformationssystem mit einer beispielhaften Ausführungsform des erfindungsgemäßen Anzeigemoduls.
Fig. 13 zeigt ein Luftfahrzeug mit einer beispielhaften Ausführungsform des erfindungsgemäßen Anzeigemoduls.

### Detaillierte Beschreibung beispielhaften Ausführungsformen

Im Folgenden werden unter Bezugsnahme auf die beigefügten Zeichnungen Ausführungsbeispiele der Erfindung beschrieben.

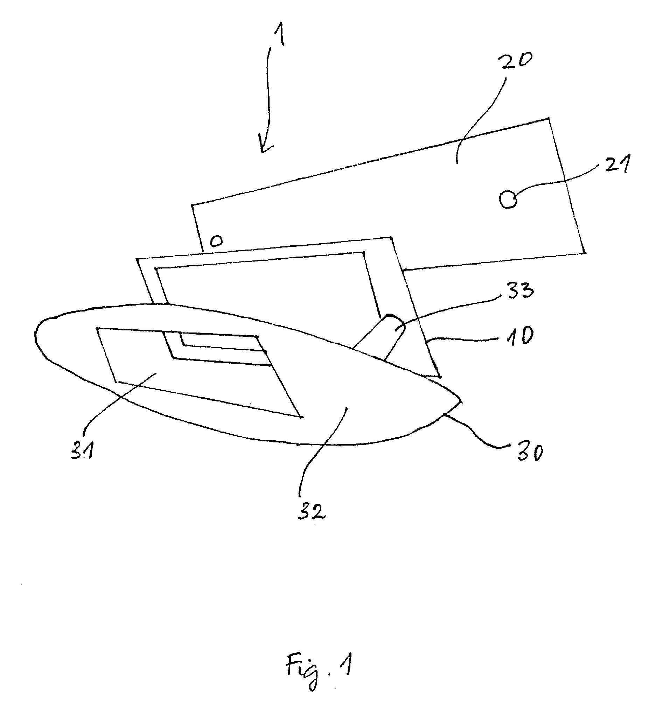

Fig. 1 zeigt eine schematische Darstellung des mechanischen Aufbaus des Anzeigemoduls. Das in der Fig. 1 dargestellten Anzeigemodul 1 umfasst eine Anzeigeeinheit 10, ein Abdeckelement 30 und eine Steuerungsplatine 20.

Die Anzeigeeinheit 10 kann beispielsweise ein OLED Display (organic lightemitting diode display) sein, da die OLED Technologie es erlaubt sehr dünne, leichte und leuchtstarke Displays herzustellen. Die Größe und Form der Anzeigeeinheit 10 kann je nach Bedarf und Anwendung variieren. Die Anzeigeeinheit kann zum Beispiel rechteckig wie in Fig. 1 sein.

Die für die Funktion des Anzeigemoduls benötigten Komponenten wie Steuerungen (z. B. Anwendungs-, Anzeigeeinheitssteuerung) und Schnittstellen (z. B. Anzeigeeinheits-Datenbus-, Gleichstrom-, und drahtlose Schnittstelle) bzw. Speicher können zum Beispiel in der Steuerungsplatine 20 integriert werden. Die Steuerungsplatine 20 ist z. B. mit Löchern 21 ausgestattet, die für die Montage der Steuerungsplatine in der Gesamtstruktur des Anzeigemoduls 1 vorgesehen sind.

Das Abdeckelement 30, das zum Beispiel eine Adapterlinse sein kann, sorgt für einen mechanischen Schutz der Anzeigeeinheit 10 und eine mechanische Anpassung des Anzeigemoduls an die Umgebung. Ferner kann das Abdeckelement 30 als Blendschutz gegen Streulicht dienen. Das Abdeckelement 30 kann ein transparentes (klarsichtiges) Material wie z. B. Kunststoff oder Glas beinhalten und kann folgende Aufgaben haben: ein Optisches Einpassen der zum Beispiel rechteckigen Anzeigeeinheit 10 in das Design der Umgebung, eine Abdeckung des Randes um die nutzbare Anzeigefläche herum, eine mechanische Befestigung des Anzeigemoduls und eine Aufnahme der Steuerungsplatine. Das Abdeckelement kann zum Beispiel oval oder rechteckig geformt sein. Die Rückseite des Abdeckelements kann bis auf einen Ausschnitt 31 für die Anzeigeeinheit 10 mit einem undurchsichtigen Lack lackiert werden, so dass eine Maskierung 32 entsteht. Die Farbe des Lacks kann individuell angepasst werden sowohl die Farbe als auch die Maskierung 32 kann je nach Anforderung und Umgebung variieren. Auf der Rückseite des Abdeckelements 30 befinden sich z. B. mechanische Aufnahmen (nicht gezeigt) für die Anzeigeinheit 10 und die Steuerungsplatine 20, sowie die Befestigungselemente 33 für die Montage des Anzeigemoduls.

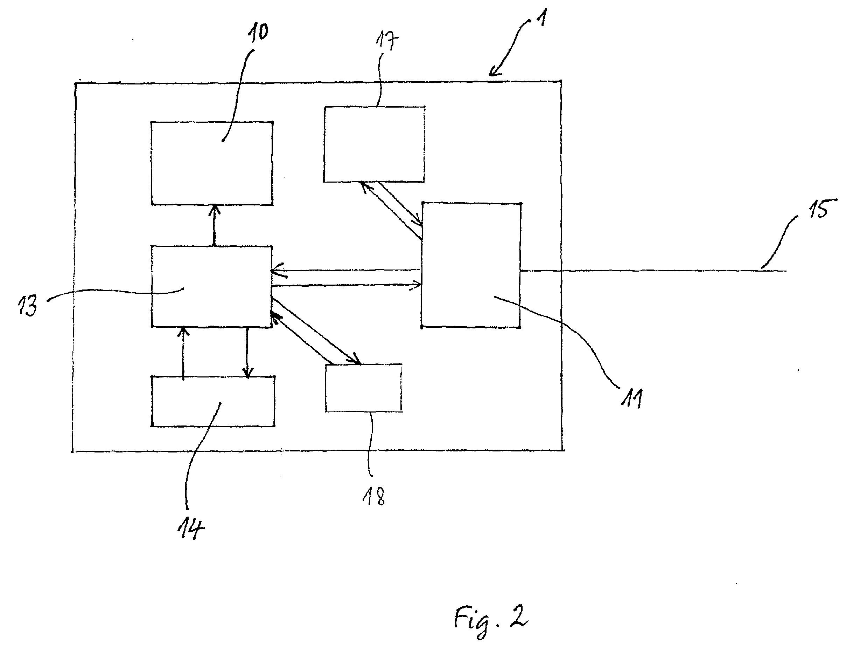

Fig. 2 zeigt eine schematische Darstellung des Aufbaus und der Funktionalität des Anzeigemoduls 1 gemäß einer beispielhaften Ausführungsform, wobei diese Ausführungsform z. B. für den Datenbusbetrieb geeignet ist. Das Anzeigemodul 1 umfasst eine Anzeigeeinheit 10, eine Schnittstelle 11, eine Steuerung 13, einen Speicher 14, eine Kabel- oder Drahtlosverbindung 15 der Schnittstelle 11 mit dem Luftfahrzeugsystem (nicht gezeigt), eine Anzeigemodultestvorrichtung 17 und einen Uhrbaustein 18. In dem Speicher 14 sind passagierspezifischen Anzeigeinformationen, wie zum Beispiel Bildelemente und/oder Symbole und/oder Videosequenzen und/oder Texte gespeichert. Auch sind verschiedene Einteilungen der Anzeigeeinheit (Layouts) in Layoutbereiche und Formatierungen im Speicher des Anzeigemoduls abgelegt.

Die Anzeigeeinheit wird mit der Steuerung 13 angesteuert. Die Steuerung 13 ist mit der Schnittstelle (z. B. einer Datenbusschnittstelle oder einer drahtlosen Datenbusschnittstelle) 11 verbunden, wobei die Schnittstele 11 mit dem Luftfahrzeugsystem über einen Datenbus (nicht gezeigt) mittels der Verbindung 15 verbunden ist. Die Datensignale vom Luftfahrzeugsystem werden über den Datenbus mit der Verbindung 15 an die Schnittstelle 11 übermitteltet. Auf der Grundlage eines an der ersten Schnittestelle 11 anliegenden Signals greift die Steuerung 13 auf den Speicher 14 zu und liest einen entsprechenden Speicherinhalt bezüglich Anzeigeinformation aus. Auf der Grundlage des ausgelesenen Speicherinhalts und des an der Schnittstelle 11 anliegenden Signals steuert dann die Steuerung 13 die Anzeigeeinheit 10 an. Dabei wählt die Steuerung 13 auf der Grundlage des an der ersten Schnittstelle 11 anliegenden Signals eine der vorher definierten und im Speicher 14 gespeicherten Einteilungen der Anzeigeeinheit 10 in Layoutbereiche aus. Ferner bearbeitet die Steuerung 13 die aus dem Speicher 14 ausgelesene Anzeigeinformationen, um eine optimale Skalierung und Platzierung der Anzeigeinformation in der Anzeigeeinheit 10 zu erreichen. Somit werden alle Anzeigeinformationen (Bildelemente, Videosequenzen, Text bzw. Uhrzeitinformation) einem entsprechenden Bereich zugeordnet und werden vollständig innerhalb des Bereichs dargestellt. Die Steuerung 13 kann auch in mehrere Einzelkomponenten aufgeteilt werden, wobei zum Beispiel eine Unterteilung in eine Anwendungssteuerung und eine Anzeigeeinheitsteuerung möglich ist. In diesem Fall sorgt eine Anwendungssteuerung für die optimale Skalierung und Platzierung von Anzeigeinformationen.

Wird die Datenübertragung über den Datenbus gestört oder ist gar nicht vorhanden, wird ein vorher definierter (default) Inhalt angezeigt.

In einem in Fig. 2 dargestellten Anzeigemodul 1 kann der Uhrbaustein 18 als eine Einzelkomponente eingebaut werden, die mit der Steuerung 13 - ähnlich wie der Speicher 14 - verbunden werden kann. Der Uhrbaustein 18 zeigt die aktuelle Ortszeit auf dem Anzeigemodul an. Dabei wird die Anfangsuhrzeit (initiale Uhrzeit) vom Luftfahrzeugsystem übermittelt und in entsprechenden Intervallen erneut abgeglichen. Somit kann beispielsweise bei einem Erreichen einer anderen Zeitzone die Urzeit aktualisiert werden. Der Uhrbaustein kann ebenso in Layoutbereiche eingebunden werden wie Piktogramme, Videosequenzen und Textobjekte.

Die Anzeigemodultestvorrichtung 17 kann z. B. ein BITE (Built-In Test Equipment) sein. Die BITE-Daten werden dabei von dem Anzeigemodul über die Schnittstelle 11 mittels der Verbindung 15 an das Luftfahrzeugsystem übermittelt.

Der Gleichstromdatenbetrieb des Anzeigemoduls 1 gemäß Fig. 2 kann erfolgen, indem die Schnittstelle 11 zur Übertragung von Datensignalen vom Luftfahrzeugsystem in Form eines Bitmutmusters an das Anzeigemodul 1 ausgelegt ist. Dabei kann z. B. die Schnittstelle 11 sowohl zur Übertragung von Datensignalen als auch zur Ankopplung einer Spannungsversorgung (nicht gezeigt) über die Verbindung 15 dienen. In diesem Fall wird die Energie des Signals auch zur Spannungsversorgung ausgenutzt. Alternativ kann die Spannungsversorgung auch unhabhängig von der Schnittstelle 11 erfolgen.

Auf der Grundlage eines an der ersten Schnittestelle 11 anliegenden Signals greift die Steuerung 13 auf den Speicher 14 zu und liest einen entsprechenden Speicherinhalt bezüglich Anzeigeinformation aus. Auf der Grundlage des ausgelesenen Speicherinhalts steuert dann die Steuerung 13 die Anzeigeeinheit 10 an. Dabei wählt erst die Steuerung 13 eine der vorher definierten und im Speicher 14 gespeicherten Einteilungen der Anzeigeeinheit 10 in Layoutbereiche aus. Ferner bearbeitet die Steuerung 13 die aus dem Speicher 14 ausgelesene Anzeigeinformationen, um eine optimale Skalierung und Platzierung der Anzeigeinformation in der Anzeigeeinheit 10 zu erreichen. Dabei kann die Verbindung 15 eine Leitung umfassen, wobei die über diese Leitung gelieferte Energie des Signals nicht nur zum Übermitteln des Bitmusters sondern auch zur Spannungsversorgung der Anzeigeeinheit 1 dient.

Der Gleichstromdatenbetrieb ist ein Betriebsmodus, der z. B. speziell für die Umrüstung älterer Flugzeuge gedacht ist. Für die Verbindung 15 können die für das ursprünglich eingesetzte Anzeigemodul schon vorhandenen Gleichstromleitungen benutzt werden. Für das Anzeigemodul im Gleichstrombetrieb wird nur eine der für die Verbindung 15 benutzten Leitungen dauerhaft eingeschaltet. Somit wird für die Spannungsversorgung des Anzeigemoduls über die Schnittstelle 11 gesorgt. Die zweite, für die Verbindung 15 benutzte, Leitung wird vom Flugzeugsystem getaktet (ein- und ausgeschaltet), um ein Bitmuster an das Anzeigemodul über die Schnittstelle 11 zu übertragen. Somit erfolgt eine einseitige Kommunikation vom Flugzeugsystem zu dem Anzeigemodul. Dabei ist die realisierbare Übertragungsrate relativ gering, wodurch der Funktionsumfang gegenüber den Datenbusbetrieb eingeschränkt ist.

Das übertragene Bitmuster ist beispielsweise fest definiert und hat immer die gleiche Länge. Jedem Bit ist z. B. eine feste Identifikationsnummer für Piktogramme oder Videosequenzen zugeordnet. Ist ein Bit gesetzt, wird das Piktogramm oder die Videosequenz angezeigt, welche unter der entsprechenden Identifikationsnummer gespeichert sind. Ist das Bit nicht gesetzt, so wird das zugeordnete Piktogramm, bzw. die Videosequenz nicht angezeigt.

Das Anzeigeeinheitslayout wird in Abhängigkeit der aktivierten Inhalte vom Anzeigemodul 1 selbstständig ausgewählt.

Ist das getaktete Signal gestört, wird ein vorher definierter (default) Inhalt angezeigt.

Diese in der Fig. 2 dargestellte Ausführungsform ermöglicht z. B. auch einen Betrieb des Anzeigemoduls in einem Stand-Alone Modus, wenn es keine Datenbusanbindung gibt (z. B. in älteren Flugzeugmodellen), indem die Schnittstelle 11 zur Spannungsversorgung und zur Signalübertragung vorgesehen ist. Da sowohl ein an die Verbindung 15 angelegter Spannungspegel als auch ein Signal aufgenommen werden kann, kann der Stand-Alone Modus erfolgen, indem an die Leitung, die an die Schnittstelle gekoppelt ist, eine entsprechende Spannung angelegt wird. Aufgrund des der Spannung entsprechenden Signals kann ein vorher festgelegter und im Speiche 14 abgelegter Inhalt angezeigt werden.

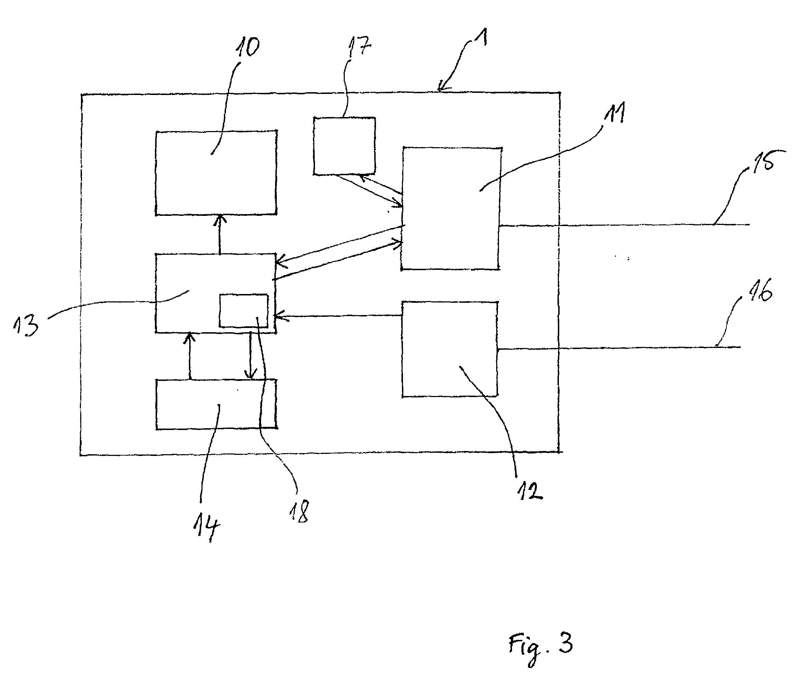

Fig. 3 zeigt eine schematische Darstellung des Aufbaus und der Funktionalität des Anzeigemoduls 1 gemäß einer beispielhaften Ausführungsform mit zwei Schnittstellen 11 und 12, wobei auch diese Ausführungsform zusätzlich zu dem Datenbusbetrieb auch für einen Gleichstromdatenbetrieb und/oder einen Stand-Alone Modus geeignet ist. Das Anzeigemodul 1 umfasst im Vergleich zu der im Bezug auf Fig. 2 beschriebenen Ausführungsform eine zusätzliche Schnittstelle 12 die mit der Steuerung 13 unabhängig von der Schnittstelle 11 verbunden ist, und eine zusätzliche Kabel- oder Drahtlosverbindung 16 der zweiten Schnittstelle 12 mit dem Luftfahrzeugsystem (nicht gezeigt). In dem Speicher 14 des Anzeigemoduls werden zusätzlich auch Konfigurationsdaten für die einzelnen Betriebsmodi abgelegt.

Wird nur die Schnittstelle 11 mit dem Luftfahrzeugsystem aktiv gekoppelt, gleicht die Funktionalität des Anzeigemodus der Funktionalität der auf der Fig. 2 dargestellten Ausführungsform. Somit kann das Anzeigemodul gemäß der auf der Fig. 3 dargestellten Ausführungsform zum Beispiel in dem Datenbusbetrieb benutzt werden.

Der Gleichstromdatenbetrieb des Anzeigemoduls 1 gemäß Fig. 3 kann erfolgen, indem die Schnittstelle 12 zur Ankopplung einer Spannungsversorgung (nicht gezeigt) an das Anzeigemodul 1 über die Verbindung 16 ausgelegt ist und die Verbindung 15 zur Übertragung von Datensignalen vom Luftfahrzeugsystem in Form eines Bitmutmusters an das Anzeigemodul 1 ausgelegt ist. Die Funktionalität der Schnittstelle 11, der Steuerung 13, des Speichers 14 und der Anzeigeinheit 10 ist analog zum Ausführungsbeispiel gemäß Fig. 2.

Der Gleichstromdatenbetrieb ist ein Betriebsmodus, der z. B. speziell für die Umrüstung älterer Flugzeuge gedacht ist. Für die Verbindungen 15 und 16 können die für das ursprünglich eingesetzte Anzeigemodul schon vorhandenen Gleichstromleitungen benutzt werden, wobei für die Verbindung 15 die eine und für die Verbindung 16 die andere von zwei vorhandenen Gleichstromleitungen benutzt wird. Für das Anzeigemodul im Gleichstrombetrieb wird nur die für die Verbindung 16 benutzte Leitung dauerhaft eingeschaltet. Somit wird für die Spannungsversorgung des Anzeigemoduls über die Schnittstelle 12 gesorgt. Die zweite, für die Verbindung 15 benutzte, Leitung wird vom Flugzeugsystem getaktet (ein- und ausgeschaltet), um ein Bitmuster an das Anzeigemodul über die Schnittstelle 11 zu übertragen. Somit erfolgt eine einseitige Kommunikation vom Flugzeugsystem zu dem Anzeigemodul. Dabei ist die realisierbare Übertragungsrate relativ gering, wodurch der Funktionsumfang gegenüber den Datenbusbetrieb eingeschränkt ist.

Das übertragene Bitmuster ist beispielsweise fest definiert und hat immer die gleiche Länge. Jedem Bit ist z. B. eine feste Identifikationsnummer für Piktogramme oder Videosequenzen zugeordnet. Ist ein Bit gesetzt, wird das Piktogramm oder die Videosequenz angezeigt, welche unter der entsprechenden Identifikationsnummer gespeichert sind. Ist das Bit nicht gesetzt, so wird das zugeordnete Piktogramm, bzw. die Videosequenz nicht angezeigt.

Das Anzeigeeinheitslayout wird in Abhängigkeit der aktivierten Inhalte vom Anzeigemodul 1 selbstständig ausgewählt.

Ist das getaktete Signal gestört, wird ein definierter (default) Inhalt angezeigt.

Der Betrieb des Anzeigemoduls 1 im Stand-Alone Modus gemäß Fig. 3 kann stattfinden, wenn es zum Beispiel keine Datenbus Anbindung gibt. Die schon vorhandenen und in dem Gleichstromdatenbetrieb benutzten Gleichstromleitungen werden für die Verbindungen 15 und 16 benutzt. Beide Schnittstellen 11 und 12 koppeln das Anzeigemodul an eine Spannungsversorgung (nicht gezeigt) über die Verbindungen 15 und 16. Wird an einer der Verbindungen 15 und 16, die an die Schnittstellen gekoppelt sind, eine entsprechende Spannung angelegt, so wird ein vorher festgelegter und im Speicher 14 abgelegter Inhalt angezeigt. Die Steuerung 13 wählt hierbei denjenigen Inhalt aus, welcher der jeweiligen Leitung zugewiesen wurde (configuration data). Bei einer gleichzeitigen Anlegung entsprechender Spannungen an den beiden Leitungen 15 und 16 wird ein Inhalt angezeigt, der unabhängig von den Inhalten der Einzelanlegung ist. Wird zum Beispiel an einer Leitung z. B. 5V angelegt, so wird ein erster Inhalt angezeigt. Wird an der anderen Leitung z. B. 5V angelegt, so wird ein zweiterInhalt angezeigt. Wird an beiden Leitungen gleichzeitig z. B 5V angelegt, so wird ein dritter Inhalt angezeigt.

Auch zeigt Fig. 3 eine Gerätevariante, wobei der Uhrbaustein 18 als ein Teil der Steuerung 13 ausgebildet ist.

Bezüglich aller oben im Bezug auf Fig. 2 und Fig. 3 aufgeführten Ausführungsbeispiele, wird die Auswahl der Einteilung in Layoutbereiche im Datenbusbetrieb vom Flugzeugsystem bestimmt, während im Gleichstrombetrieb und im Stand-Alonebetrieb die Auswahl in Abhängigkeit der aktivierten Inhalte vom Anzeigemodul selbstständig getroffen wird. Welche Einteilung bei welcher Kombination aktiver Inhalte gewählt werden soll, wird im Rahmen des Inhaltshochladens (content upload) festgelegt. Auch die Zuordnung eines Piktogramms/ einer Videosequenz/ eines Textes/ einer Formatierung zu den drei oben ausgeführten Ansteuerungsvarianten (configuration data) geschieht im Rahmen des Inhaltshochladens.

Um die darzustellenden Inhalte und die notwendigen Konfigurationsdaten in den Speicher 14 des Anzeigemoduls 1 zu bekommen, gibt es zwei Hochlademodi einen drahtgebundenen und einen drahtlosen Hochlademodus (wired upload mode und wireless upload mode). Der drahtgebundene Hochlademodus ist für das Hochladen von Daten über die Datenbusschnittstelle vorgesehen. Hierbei können die Daten über das Flugzeugsystem oder von einem direkt an die Datenbusschnittstelle angeschlossenen Programmiergerät kommen. Der drahtgebundene Hochlademodus wird mit einem speziellen Befehl über den Datenbus aktiviert. Der drahtlose Hochlademodus ist für das Hochladen von Daten über die drahtlose Datenbusschnittstelle vorgesehen. Die Daten werden von einem Programmiergerät drahtlos an das Anzeigemodul übertragen. Der drahtlose Hochlademodus kann über eine kabelgebundene Schnittstelle aktiviert werden. Je nach Betriebsmodus kann dies entweder mit einem Befehl über die Datenbusschnittstelle oder mit einem definierten Bitmuster über die im Gleichstrombetrieb vorhandene Schnittstelle geschehen.

Im drahtlosen Hochlademodus werden verschiedene Statusmeldungen über das Anzeigemodul angezeigt. So kann zum Beispiel erfasst werden welche Module in Reichweite des Programmiergerätes sind (verbunden mit dem Programmiergerät oder nicht).

Mit beiden Hochlademodi können die gleichen Daten in die Anzeigeeinheit des Anzeigemoduls geladen werden: Piktogramme und Videosequenzen, Zeichensätze für Textmodule und den Uhrbaustein 18, Inhalte und Formate von Textmodulen, Konfigurationsdaten für die einzelnen Betriebsmodi.

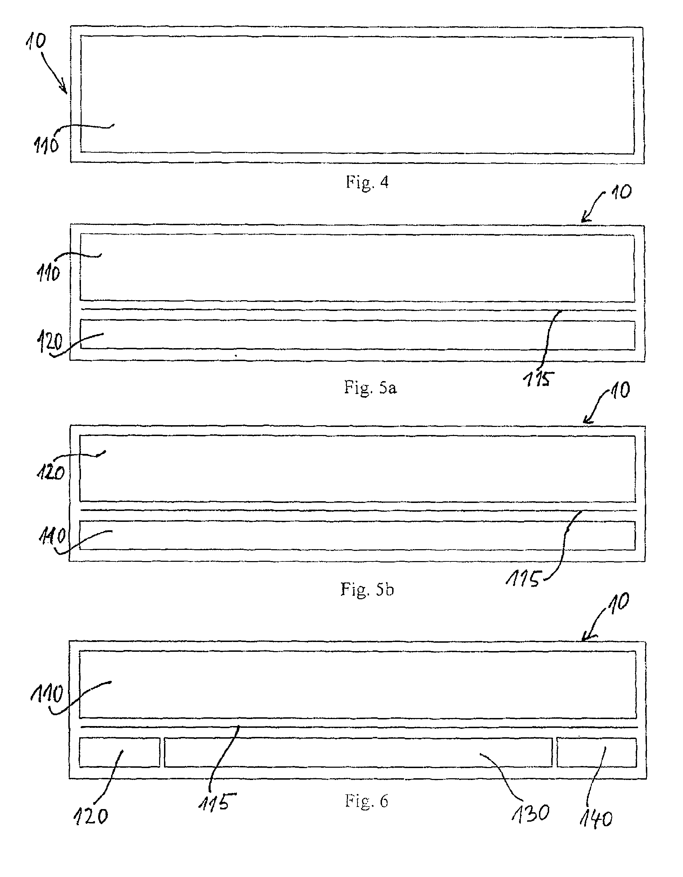

Fig. 4 zeigt eine beispielhafte Einteilung der Anzeigeeinheit 10 mit einem Layoutbereich 110.

Fig. 5a zeigt eine beispielhafte Einteilung der Anzeigeeinheit 10 mit zwei Layoutbereichen 110 und 120, wobei der Bereich 110 oberhalb des Bereichs 120 positioniert ist und die Bereiche 110 und 120 durch einen horizontalen Bereichsteiler 115 getrennt sind. Fig. 5b zeigt eine andere beispielhafte Einteilung der Anzeigeeinheit 10 mit einer umgetauschten Positionierung der Bereiche 110 und 120.

Fig. 6 zeigt eine beispielhafte Einteilung der Anzeigeeinheit 10 mit vier Layoutbereichen 110, 120, 130 und 140. Die Bereiche 120, 130 und 140 sind nebeneinander in einer Reihe unterhalb des Bereichs 110 positioniert und von diesem durch einen horizontalen Bereichsteiler 115 getrennt.

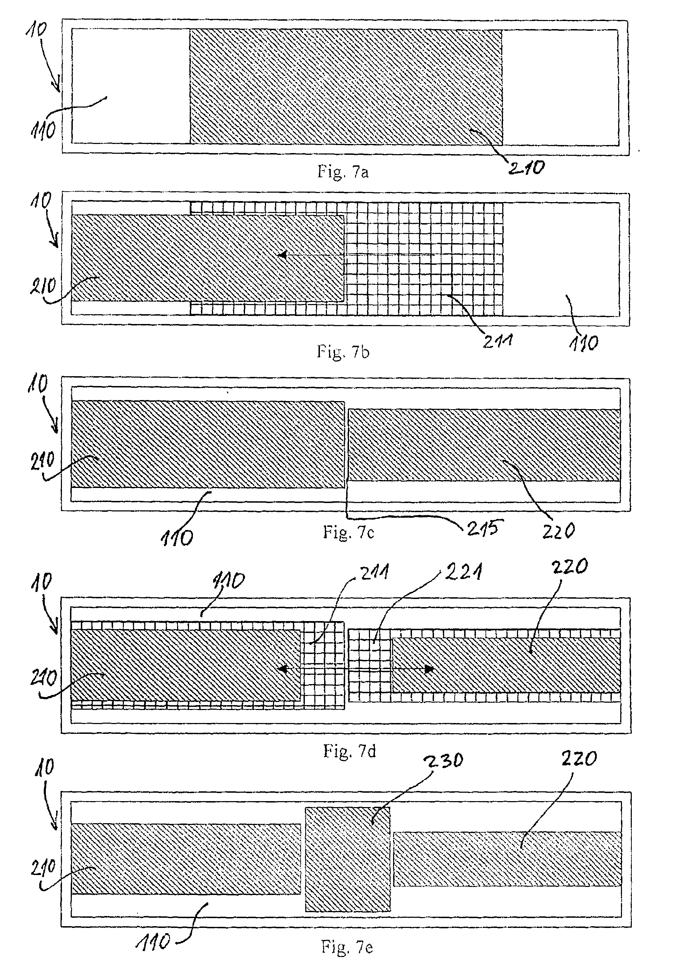

Fig. 7 zeigt einige Beispiele der Bearbeitung von Bildelementen innerhalb der Layoutbereiche der Anzeigeeinheit, wobei ein oder mehrere Bildelemente auch durch Videosequenzen ersetzt werden können. Fig. 7a zeigt eine Einteilung der Anzeigeeinheit 10 mit einem Layoutbereich 110, wobei innerhalb des Bereichs 110 ein Bildelement 210 angezeigt wird. Fig. 7b zeigt eine mit dem Pfeil angedeutete Bewegung und eine Skalierung des Bildelements 210 von seiner ursprünglichen Platzierung 211. Dabei entsteht im Bereich 110 ein freier Platz, in den (in Fig. 7c) ein zweites Bildelement 220 eingefügt wird. Die Bildelemente 210 und 220 sind voneinander mit einem definierten Abstand 215 getrennt. Fig. 7d zeigt mit den Pfeilen angedeutete Bewegungen und Skalierungen der Bildelemente 210 und 220 von deren ursprünglichen Platzierungen 211 und 221. Dabei entsteht im Bereich 110 ein freier Platz, in den (in Figur 7e) ein drittes Bildelement 230 eingefügt wird.

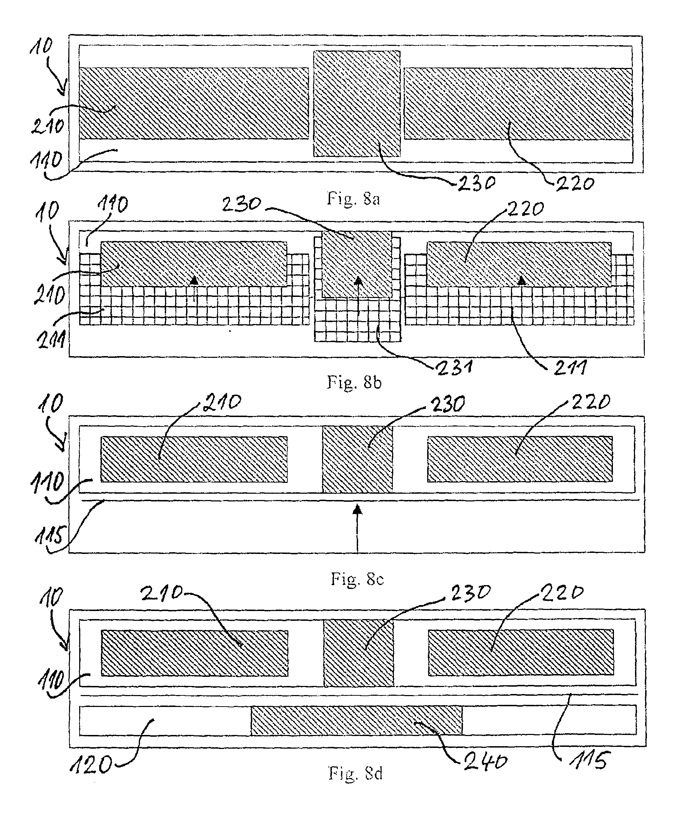

Fig. 8 zeigt eine beispielhafte Veränderung der Einteilung der Anzeigeeinheit und der Bildanzeige. Fig. 8a zeigt eine Einteilung der Anzeigeeinheit 10 mit einem Layoutbereich 110, wobei innerhalb des Bereichs 110 drei Bildelemente 210, 220 und 230 angezeigt werden. Fig. 8b zeigt mit Pfeilen angedeutete Bewegungen und eine Skalierungen der Bildelemente 210, 220 und 230 von deren ursprünglichen Platzierungen 211, 221 und 231. Dabei entsteht im Bereich 110 ein freier Platz, in den (in Figur 8c) ein horizontaler Bereichsteiler 115 eingefügt wird und somit unterhalb des Bereichs 110 ein zweiter Bereich 120 entsteht. In Fig. 8d wird in dem zweiten Bereich 120 ein viertes Bild 240 angezeigt.

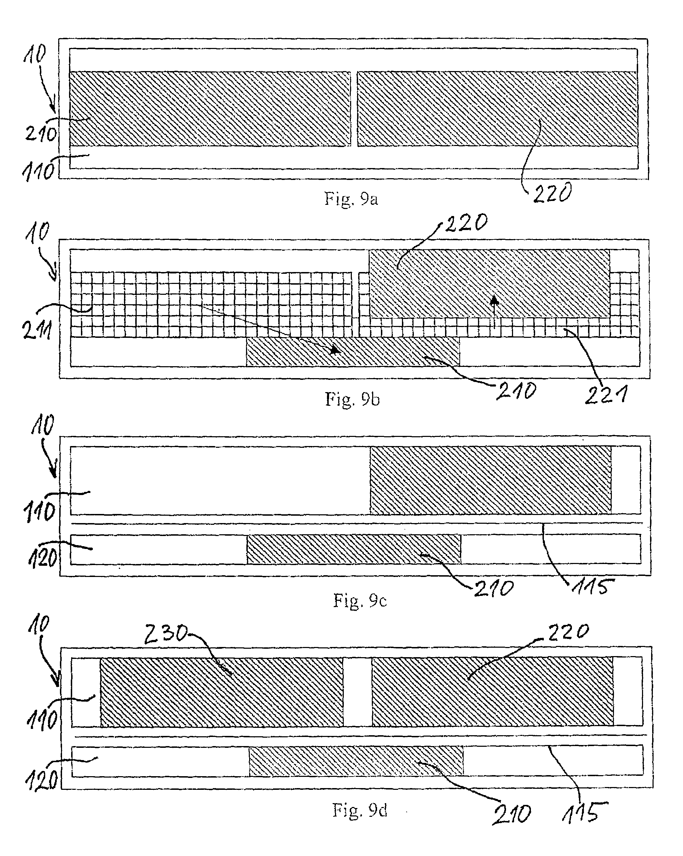

Fig. 9 zeigt eine beispielhafte Veränderung der Einteilung der Anzeigeeinheit 10 und der Bildanzeige mit einem Bereichssprung. Fig. 9a zeigt eine Einteilung der Anzeigeeinheit 10 mit einem Layoutbereich 110, wobei innerhalb des Bereichs 110 zwei Bildelemente 210 und 220 angezeigt werden. Fig. 9b zeigt mit den Pfeilen angedeutete Bewegungen und Skalierungen der Bildelemente 210 und 220 von deren ursprünglichen Platzierungen 211 und 221. Dabei wird das Bildelement 210 unterhalb des Bildelements 220 platziert. In Fig. 9c wird ein horizontaler Bereichteiler 115 zwischen die Bildelemente 210 und 220 eingefügt, so dass sich das Bildelement 210 in dem Bereich 110 befindet und das Bildelement 220 sich in einem neu definierten Bereich 120 befindet. In Fig. 9d wird in den noch vorhandenen Platz in dem Bereich 110 ein drittes Bildelement 230 eingefügt.

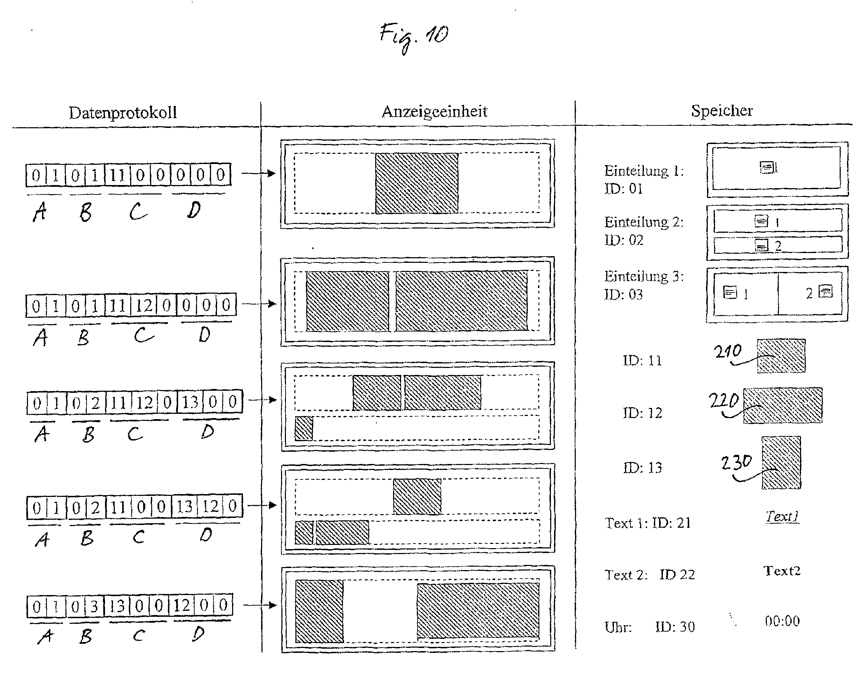

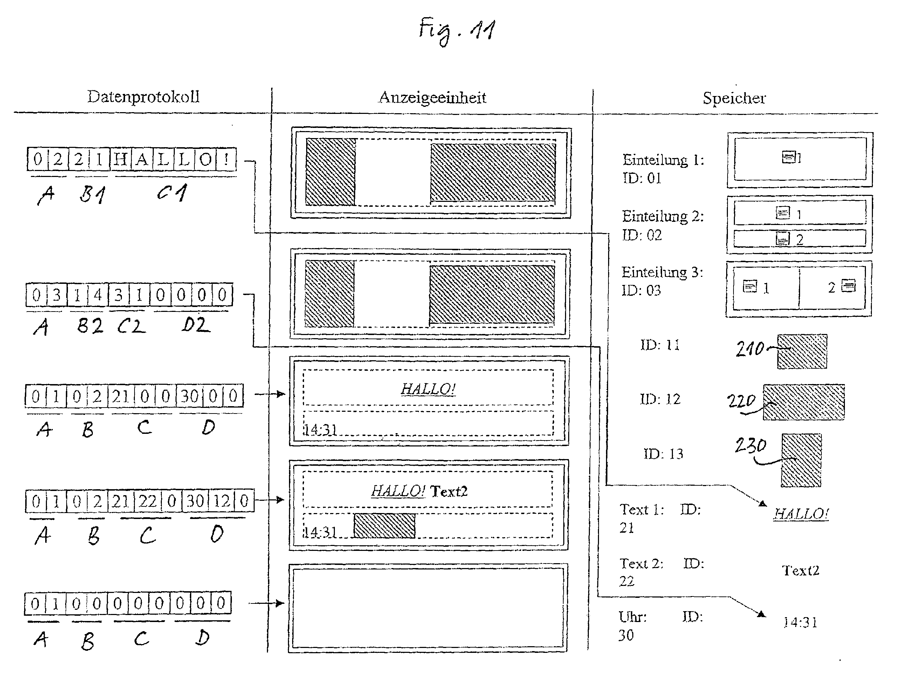

Diese schon mit Bezug auf Figuren 1 bis 9 eingeführte Bezugszeichen werden identisch auch in den Figuren 10 und 11 verwendet.

Fig. 10 zeigt einige Beispiele des Verhaltens des Anzeigemoduls in einem Datenbusbetrieb.

Die erste Tabellenspalte in Fig. 10 zeigt einige Beispiele von Datenprotokollen für das Ansteuern des Anzeigemoduls im Datenbusbetrieb. Die in Fig. 10 gezeigten Datenprotokolle für die Einteilung der Anzeigeeinheit 10 in die Layoutbereiche und für die Anzeige von Bildelementen oder Videosequenzen bestehen aus vier Abschnitten A bis D. Im Abschnitt A wird dem Anzeigemodul eine Befehlsidentifikationsnummer, im Abschnitt B eine Identifikationsnummer der Einteilung der Anzeigeinheit 10, im Abschnitt C eine Identifikationsnummer für die in dem Layoutbereich 110 angezeigten Bildelemente oder Videosequenzen und im Abschnitt D eine Identifikationsnummer für die in dem zweiten Layoutbereich 120 angezeigten Bildelemente oder Videosequenzen mitgeteilt. Die dritte Spalte zeigt einige beispielhaften Zuordnungen der jeweiligen Identifikationsnummern (für die Einteilungen, Bildelemente, Texte bzw. den Uhrbaustein) zu den in dem Speicher gespeicherten Anzeigeinformationen. Zum Beispiel entspricht der in Fig. 4 dargestellten Einteilung die Identifikationsnummer ID: 01, der in Fig. 5a dargestellten Einteilung die Identifikationsnummer ID: 02 usw. Die mittlere Spalte zeigt die, zu den in der ersten Spalte aufgeführten beispielhaften Datenprotokollen zugehörigen Erscheinungen der Anzeigeeinheit 10. Die Zugehörigkeit der Datenprotokolle und der Erscheinungen der Anzeigeinheit ist mit Pfeilen angedeutet.

Fig. 11 zeigt einige weiteren Beispiele des Verhaltens des Anzeigemoduls in dem Datenbusbetrieb. Die dritte Spalte zeigt einige beispielhaften Zuordnungen der jeweiligen Identifikationsnummern (für die Einteilungen, Bildelemente, Texte bzw. den Uhrbaustein) zu den in dem Speicher gespeicherten Anzeigeinformationen. Zum Beispiel entspricht der in Fig. 4 dargestellten Einteilung die Identifikationsnummer ID: 01, der in Fig. 5a dargestellten Einteilung die Identifikationsnummer ID: 02 usw. Mit dem in der ersten Zeile der ersten Spalte gezeigten Datenprotokoll wird ein bestimmter Textinhalt (wie hier zum Beispiel "HALLO!") definiert. Dieses Datenprotokoll besteht aus drei Abschnitten A, B1 und C1. Im Abschnitt A wird dem Anzeigemodul eine Befehlsidentifikationsnummer, im Abschnitt B1 eine Textidentifikationsnummer und im Abschnitt C1 ein Textinhalt mitgeteilt. Dieser Textinhalt wird dann unter seiner Identifikationsnummer ID: 21 in den Speicher gespeichert. Mit dem in der zweiten Zeile der ersten Spalte gezeigten Datenprotokoll wird zum Beispiel eine Aktualisierung der Uhrzeit oder eine Anfangsuhrzeit oder eine andere Uhrzeit (wie hier zum Beispiel "14:31") eingegeben. Dieses Datenprotokoll besteht aus vier Abschnitten A, B2, C2 und D2. Im Abschnitt A wird dem Anzeigemodul eine Befehlsidentifikationsnummer, im Abschnitt B2 die Stunde und im Abschnitt C2 Minuten mitgeteilt. Der Abschnitt D2 wird bei der Zeiteingabe nicht benutzt. Die eingegebene Uhrzeit wird dann in dem Speicher 14 gespeichert. Nach der Textdefinition und der Uhrzeiteingabe werden der Text und die Zeitangabe an der Anzeigeeinheit 10 angezeigt. Beispiele für die dazu verwendeten Datenprotokolle sind in der dritten und vierten Zeile der ersten Spalte gezeigt. Diese Datenprotokolle bestehen aus vier Abschnitten A bis D. Im Abschnitt A wird dem Anzeigemodul eine Befehlsidentifikationsnummer, im Abschnitt B eine Identifikationsnummer der Einteilung der Anzeigeinheit, im Abschnitt C eine Identifikationsnummer für die in dem Layoutbereich 110 angezeigten Texte, Bildelemente Videosequenzen bzw. Uhrzeiten und im Abschnitt D eine Identifikationsnummer für die in dem zweiten Layoutbereich 120 angezeigten Bildelemente, Texte, Bildelemente, Videosequenzen bzw. Uhrzeiten mitgeteilt. Die entsprechenden Erscheinungen der Anzeigeeinheit 10 sind in der dritten und vierten Zeile der zweiten Spalte gezeigt. Die letzten Zeilen der ersten und zweiten Spalte zeigen eine Einteilung der Anzeigeeinheit 10 mit einem leeren Layoutbereich und das entsprechende Datenprotokoll.

Die ersten zwei Spalten der zusammensetzten Figuren 10 und 11 stellen eine Zeitreihe von Datenprotokollen und eine zugehörige Zeitreihe von Informationsanzeigen dar.

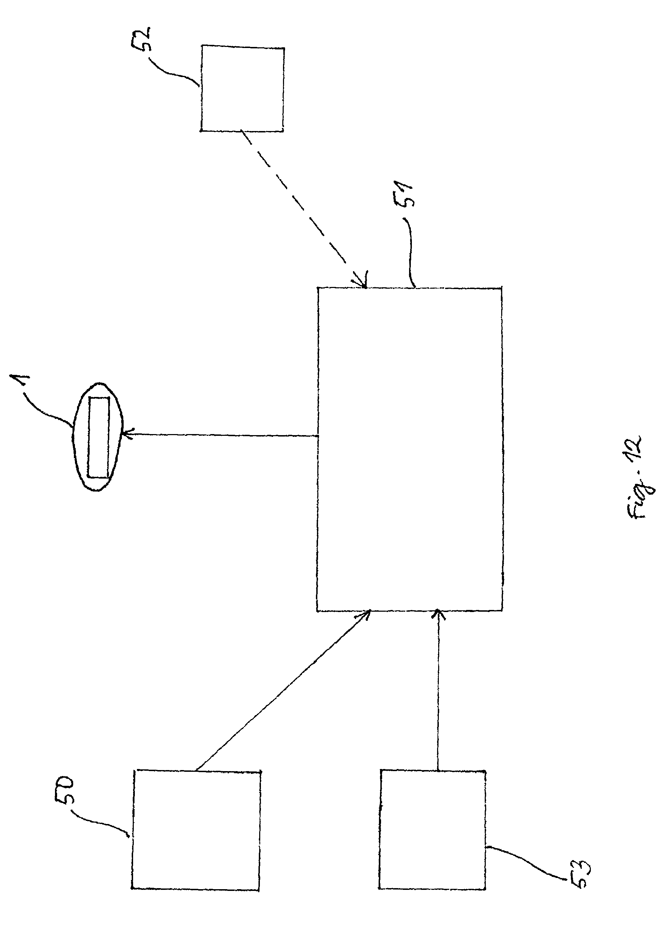

Fig. 12 zeigt ein Luftfahrzeuginformationssystem mit einer beispielhaften Ausführungsform des erfindungsgemäßen Anzeigemoduls. Das Luftfahrzeuginformationssystem umfasst ein FAP (Flight Attendant Panel) 50, ein CMS (Cabin Management System) 51 und das erfindungsgemäße Anzeigemodul 1. Das FAP 50 wird mit dem CMS 51 verbunden, das weiter mit dem Anzeigemodul 10 verbunden ist. Damit können die Flugbegleiter mit dem FAP 50 durch unterschiedliche Bedienelemente gewünschte Einstellungen des Anzeigemoduls manuell vornehmen oder Bedingungen während des Flugs anpassen. Mit dem CMS 51 wird für eine reibungslose technische Umsetzung der entsprechenden Steuerungsbefehle gesorgt. Auch die Piloten können durch unterschiedliche Bedienelemente (z. B. ein Schalter für das "Anschnallen" Piktogramm) im Cockpit 53 gewünschte Einstellungen des Anzeigemoduls manuell vornehmen oder Bedingungen während des Flugs anpassen, indem das CMS mit dem Cockpit 53 verbunden ist. In diesem Ausführungsbeispiel wird ein Programmiergerät 52 zum drahtlosen Hochladen von darzustellenden Inhalten und den notwendigen Konfigurationsdaten in den Speicher 14 des Anzeigemoduls 1 benutzt. Zum Hochladen kann aber auch ein Datenbus (nicht gezeigt) benutzt werden. Das Hochladen verläuft so wie es schon oben im Bezug auf Fig. 2 und Fig. 3 beschrieben worden ist.

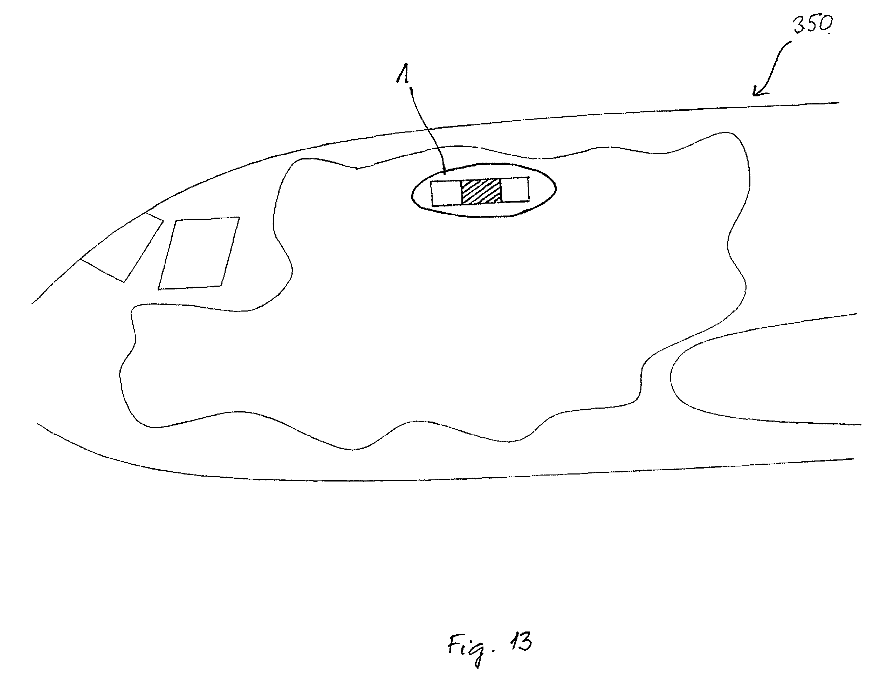

Fig. 13 zeigt ein Luftfahrzeug 350 mit einer beispielhaften Ausführungsform 1 des erfindungsgemäßen Anzeigemoduls.

Obwohl die Erfindung unter Bezugsname auf ein bevorzugtes Ausführungsbeispiel beschrieben wurde, können verschiedenen Änderungen und Modifikationen vorgenommen werden, ohne den Schutzbereich der Erfindung zu verlassen. Die Erfindung kann auch in anderen Bereichen als der Luftfahrt, beispielsweise in Zügen, Busen oder Schiffen verwendet werden, wo ebenfalls Anzeigemodule zum Anzeigen von passagierspezifischen Anzeigeinformationen benötigt werden oder gewünscht sind.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Anzeigemodul zum Anzeigen von passagierspezifischen Anzeigeinformationen in einem Luftfahrzeug umfassend:
eine Anzeigeeinheit (10),
eine Steuerung (13),
einen Speicher (14), und
eine erste Schnittstelle (11),
wobei die erste Schnittstelle (11) mit der Steuerung (13) verbunden ist, und
wobei die Steuerung (13) ausgelegt ist, um auf der Grundlage eines an der ersten Schnittestelle (11) anliegenden Signals einen in dem Speicher abgelegten und dem Signal zugeordneten Speicherinhalt bezüglich Anzeigeinformation auszulesen und auf der Grundlage des ausgelesenen Speicherinhalts und des an der Schnittstelle (11) anliegenden Signals die Anzeigeeinheit (10) anzusteuern, **dadurch gekennzeichnet, dass**
die Steuerung ausgelegt ist, auf der Grundlage des an der ersten Schnittstelle (11) anliegenden Signals eine in dem Speicher (14) gespeicherte Einteilung der Anzeigeeinheit (10) in Layoutbereiche auszuwählen; und dass
die Steuerung ausgelegt ist, die Anzeigeeinheit hinsichtlich der Darstellungsposition und/oder Darstellungsgröße der Anzeigeinformation derart anzusteuern,
dass eine Skalierung bzw. Platzierung der Anzeigeinformation in der Anzeigeeinheit erreichbar ist, so dass die Anzeigeinformationen einem entsprechenden Bereich zuordenbar und innerhalb des Bereichs darstellbar sind.

2. Anzeigemodul nach Anspruch 1, ferner umfassend eine zweite Schnittstelle (12), die ausgelegt ist zur Ankopplung einer Spannungsversorgung an das Anzeigemodul (1).

3. Anzeigemodul nach Anspruch 1, wobei die erste Schnittstelle (11) ausgelegt ist zur Ankopplung einer Spannungsversorgung an das Anzeigemodul (1).

4. Anzeigemodul nach Anspruch 2, wobei die erste Schnittstelle (11) auch ausgelegt ist zur Ankopplung einer Spannungsversorgung an das Anzeigemodul (1), und die zweite Schnittstelle (12) auch mit der Steuerung (13) verbunden ist, wobei die Steuerung (13) ausgelegt ist, um auf der Grundlage eines an der zweiten Schnittstelle (12) anliegenden Signals einen zweiten Speicherinhalt bezüglich Anzeigeinformation auszulesen und auf der Grundlage des ausgelesenen zweiten Speicherinhalts und des an der zweiten Schnittstelle (12) anliegenden Signals die Anzeigeeinheit (10) anzusteuern.

5. Anzeigemodul nach einem der Ansprüche 1 bis 4, ferner umfassend ein Abdeckelement (30), das als mechanischer Schutz der Anzeigeeinheit, mechanische Anpassung an die Umgebung, und/oder als Blendschutz gegen Streulicht ausgelegt ist.

6. Anzeigemodul nach einem der Ansprüche 1 und 5, wobei die Steuerung (13), der Speicher (14) und die Schnittstellen (11, 12) in einer Steuerungsplatine (20) integriert sind.

7. Anzeigemodul nach einem der Ansprüche 1 bis 6, wobei wenigstens eine der Schnittstellen (11, 12) eine drahtlose Schnittstelle ist.

8. Anzeigemodul nach einem der vorangegangenen Ansprüche, wobei die Anzeigeinformation wenigstens eine Information ist aus einer Gruppe, bestehend aus Bildelementen, Videosequenzen, Text und Formatierung.

9. Anzeigemodul nach Anspruch 8, wobei die Steuerung (13) ausgelegt ist, die Anzeigeeinheit (10) auf der Grundlage einer Anzeigeinformation aus einem Text und einer entsprechenden Textformatierung anzusteuern.

10. Anzeigemodul nach einem der vorangegangenen Ansprüche, wobei die Steuerung (13) ausgelegt ist, den Speicherinhalt über eine der Schnittstellen (11, 12) ein- bzw. auszulesen.

11. Anzeigemodul nach einem der vorangegangenen Ansprüche, ferner umfassend einen Uhrbaustein (18), wobei die Steuerung (13) ausgelegt ist, um auf der Grundlage eines an einer der Schnittstellen (11, 12) anliegenden Signals den Uhrbaustein (18) auszulesen und auf der Grundlage des ausgelesenen Uhrbausteins und des an der Schnittstelle (11, 12) anliegenden Signals die Anzeigeeinheit (10) anzusteuern.

12. Anzeigemodul nach Anspruch 1, ferner umfassend eine Anzeigemodultestvorrichtung 17, wobei die Anzeigemodultestvorrichtung 17 ausgebildet ist, um einen Datenaustausch zu Testzwecken zu veranlassen.

13. Luftfahrzeuginformationssystem mit einem Anzeigemodul nach einem der Ansprüche 1 bis 11, ferner umfassend ein Leitsystem (51) für einen Passagierraum und ein Flugbegleitersteuerpult (50), wobei das Flugbegleitersteuerpult (50) zum Ansteuern des Anzeigemoduls (1) über das Leitsystem (51) ausgestaltet ist.

14. Luftfahrzeug mit einem Anzeigemodul (1) nach einem der vorangegangenen Ansprüche 1 bis 11.

15. Verfahren zum Anzeigen von passagierspezifischen Anzeigeinformationen in einem Luftfahrzeug umfassend:
Anlegen eines Signals an einer Schnittstelle (11, 12) eines Anzeigemoduls (1),
Auslesen eines Speicherinhaltes bezüglich Anzeigeinformation des Anzeigemoduls (1) auf der Grundlage des an der Schnittstelle (11, 12) angelegten Signals, und
Auswählen einer in dem Speicher (14) gespeicherten Einteilung der Anzeigeeinheit (10) in Layoutbereiche auf der Grundlage des an der ersten Schnittstelle (11) anliegenden Signals;
Ansteuern einer Anzeigeeinheit (10) auf der Grundlage des ausgelesenen ersten Speicherinhalts und des an der Schnittstelle (11, 12) angelegten Signals,
wobei das Ansteuern ein Skalieren bzw. Platzieren der Anzeigeinformation in der Anzeigeeinheit hinsichtlich der Darstellungsposition und/ oder Darstellungsgröße der Anzeigeinformation umfasst, so dass die Anzeigeinformationen einem entsprechenden Bereich zuordenbar und innerhalb des Bereichs darstellbar sind.

## Claims

1. A display module for displaying passenger-specific display information in an aircraft, comprising:
a display unit (10),
a control unit (13),
a storage device (14), and
a first interface (11),
wherein the first interface (11) is connected to the control unit (13), and
wherein the control unit (13) is designed, on the basis of a signal that is present at the first interface (11), to read out a storage device content stored in the storage device and associated with the signal in relation to display information, and on the basis of the read-out storage device content and of the signal present at the interface (11) to control the display unit (10),
**characterized in that**
the control unit is designed, on the basis of the signal present at the first interface (11), to select one sectioning of the display unit (10) in layout regions, which has been stored in the storage device (14); and **in that**
the control unit is designed to control the display unit with regard to at least one of the presentation position and/or the presentation size of the display information for scaling or placing the display information in the display unit, in such a way that, the display information is associated with a corresponding region and is displayed completely within the region.

2. The display module according to claim 1, further comprising a second interface (12) that is designed to couple a voltage supply to the display module (1).

3. The display module according to claim 1, wherein the first interface (11) is designed to couple a voltage supply to the display module (1).

4. The display module according to claim 2, wherein the first interface (11) is designed to couple a voltage supply to the display module (1), and the second interface (12) is connected to the control unit (13), wherein the control unit (13) is designed, on the basis of a signal present at the second interface (12), to read out a second storage device content with regard to display information, and on the basis of the read-out second storage device content and of the signal present at the second interface (12) to control the display unit (10).

5. The display module according to any one of claims 1 to 4, further comprising a cover member (30) that is designed as a device providing at least one of mechanical protection for the display unit, mechanical adaptation to the surroundings, and/or an anti-glare device against scattered light.

6. The display module according to any one of claims 1 and 5, wherein the control unit (13), the storage device (14) and the interfaces (11, 12) are integrated in a controller board (20).

7. The display module according to any one of claims 1 to 6, wherein at least one of the interfaces (11, 12) is a wireless interface.

8. The display module according to any one of the preceding claims, wherein the display information is selected from the group consisting of image elements, video sequences, text, and formatting.

9. The display module according to claim 8, wherein the control unit (13) is designed to control the display unit (10) on the basis of display information comprising text and corresponding text formatting.

10. The display module according to any one of the preceding claims, wherein the control unit (13) is designed to read the storage device content in/out by way of one of the interfaces (11, 12).

11. The display module according to any one of the preceding claims, further comprising a clock module (18), wherein the control unit (13) is designed, on the basis of a signal that is present at one of the interfaces (11, 12), to read out the clock module (18), and on the basis of the read-out clock module and of the signal present at the interface (11, 12) to control the display unit (10).

12. The display module according to claim 1, further comprising a display module test device (17), wherein the display module test device (17) is designed to cause a data exchange for test purposes.

13. An aircraft information system with a display module according to any one of the claims 1 to 11, further comprising a cabin management system (51) and a flight attendant panel (50), wherein the flight attendant panel (50) is designed to control the display module (1) by way of the cabin management system (51).

14. An aircraft with a display module (1) according to any one of the claims 1 to 11.

15. A method for displaying passenger-specific display information in an aircraft, comprising:
Applying a signal to an interface (11, 12) of a display module (1);
Reading out a storage device content with regard to display information of the display module (1) on the basis of the signal applied to the interface (11,12);
Selecting one sectioning of the display unit (10) in layout regions, which has been stored in the storage device (14), on the basis of the signal applied to the first interface (11); and
Controlling a display unit (10) on the basis of the read-out storage device content and of the signal applied to the interface (11, 12), wherein controlling comprises scaling or placing the display information in the display with regard to at least one of the presentation position and/or the presentation size of the display information, in such a way that, the display information is associated with a corresponding region and is displayed complete.

## Revendications

1. Module d'affichage destiné à afficher des informations d'affichage spécifiques aux passagers dans un aéronef, comprenant :
- une unité d'affichage (10),
- une commande (13),
- une mémoire (14), et
- une première interface (11),
la première interface (11) étant reliée à la commande (13) et la commande (13) étant conçue pour lire, à partir d'un signal placé sur la première interface (11), un contenu de mémoire concernant des informations d'affichage qui est enregistré dans la mémoire et associé au signal et, à partir du contenu de mémoire lu et du signal placé sur l'interface (11), à actionner l'unité d'affichage (10),
**caractérisé en ce que**
la commande est conçue pour sélectionner dans des zones de mise en page, à partir du signal placé sur la première interface (11), une division de l'unité d'affichage (10) mémorisée dans la mémoire (14) ; et **en ce que**
la commande est conçue pour actionner l'unité d'affichage par rapport à la position de représentation et/ou la taille de représentation de l'information d'affichage de manière à pouvoir obtenir une mise à l'échelle ou un placement de l'information d'affichage dans l'unité d'affichage de telle sorte que les informations d'affichage puissent être associées à une zone correspondante et être représentées à l'intérieur de cette zone.

2. Module d'affichage selon la revendication 1, comprenant en outre une seconde interface (12) conçue pour connecter une alimentation en tension au module d'affichage (1).

3. Module d'affichage selon la revendication 1, dans lequel la première interface (11) est conçue pour connecter une alimentation en tension au module d'affichage (1).

4. Module d'affichage selon la revendication 2, dans lequel la première interface (11) est également conçue pour connecter une alimentation en tension au module d'affichage (1) et la seconde interface (12) est également reliée à la commande (13), la commande (13) étant conçue pour lire, à partir d'un signal placé sur la seconde interface (12), un second contenu de mémoire concernant des informations d'affichage et, à partir du second contenu de mémoire lu et du signal placé sur la seconde interface (12), à actionner l'unité d'affichage (10).

5. Module d'affichage selon une des revendications 1 à 4, comprenant en outre un élément de recouvrement (30) qui est conçu sous la forme d'une protection mécanique de l'unité d'affichage, d'une adaptation mécanique à l'environnement et/ou sous la forme d'une protection contre la lumière diffuse.

6. Module d'affichage selon une des revendications 1 et 5, dans lequel la commande (13), la mémoire (14) et les interfaces (11, 12) sont intégrées dans une platine de commande (20).

7. Module d'affichage selon une des revendications 1 à 6, dans lequel au moins une des interfaces (11, 12) est une interface sans fil.

8. Module d'affichage selon une des revendications précédentes, dans lequel l'information d'affichage est au moins une information provenant d'un groupe composé d'éléments d'images, de séquences vidéos, de texte et de mise en forme.

9. Module d'affichage selon la revendication 8, dans lequel la commande (13) est conçue pour actionner l'unité d'affichage (10) à partir d'une information d'affichage provenant d'un texte et d'une mise en forme de texte correspondante.

10. Module d'affichage selon une des revendications précédentes, dans lequel la commande (13) est conçue pour emmagasiner ou lire le contenu de mémoire par l'intermédiaire d'une des interfaces (11, 12).

11. Module d'affichage selon une des revendications précédentes, comprenant en outre un module d'horloge (18), dans lequel la commande (13) est conçue pour lire le module d'horloge (18) à partir d'un signal placé sur une des interfaces (11, 12) et pour actionner l'unité d'affichage (10) à partir du module d'horloge lu et du signal placé sur une des interfaces (11, 12).

12. Module d'affichage selon la revendication 1, comprenant en outre un dispositif de test de module d'affichage (17), dans lequel le dispositif de test de module d'affichage (17) est configuré pour procéder à un changement de date aux fins de test.

13. Système d'information d'aéronef présentant un module d'affichage selon une des revendications 1 à 11, comprenant en outre un système de commande (51) pour un espace passagers et un pupitre de commande de steward (50), le pupitre de commande de steward (50) étant réalisé pour actionner le module d'affichage (1) par l'intermédiaire du système de commande (51).

14. Aéronef comprenant un module d'affichage (1) selon une des revendications précédentes 1 à 11.

15. Procédé d'affichage d'informations d'affichage spécifiques aux passagers dans un aéronef, comprenant :
- le placement d'un signal sur une interface (11, 12) d'un module d'affichage (1),
- la lecture d'un contenu de mémoire concernant des informations d'affichage du module d'affichage (1) à partir du signal placé sur l'interface (11, 12), et
- sélectionner une division de l'unité d'affichage (10) enregistrée dans la mémoire (14) dans des zones de mise en page à partir du signal placé dans la première interface (11) ;
- l'actionnement d'une unité d'affichage (10) à partir du premier contenu de mémoire lu et du signal placé sur l'interface (11, 12),
l'actionnement comprenant une mise à l'échelle ou un placement de l'information d'affichage dans l'unité d'affichage concernant la position de représentation et/ou la taille de représentation de l'information d'affichage de telle sorte que les informations d'affichage puissent être associées à une zone correspondante et être représentées à l'intérieur de cette zone.
